(19) Europäisches Patentamt
European Patent Office
Office européen des brevets

(11) **EP 4 723 208 A1**

(12) **EUROPEAN PATENT APPLICATION**
published in accordance with Art. 153(4) EPC

(43) Date of publication:
08.04.2026 Bulletin 2026/15

(51) International Patent Classification (IPC):
*H01M 4/139* (2010.01)    *H01M 4/13* (2010.01)
*H01M 4/36* (2006.01)

(21) Application number: 24815338.9

(52) Cooperative Patent Classification (CPC):
Y02E 60/10

(22) Date of filing: 22.05.2024

(86) International application number:
PCT/JP2024/018890

(87) International publication number:
WO 2024/247854 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.05.2023 JP 2023090456

(71) Applicant: FUJIFILM Corporation
Tokyo 106-8620 (JP)

(72) Inventor: ISOJIMA, Hiroshi
Minamiashigara-shi, Kanagawa 250-0193 (JP)

(74) Representative: HGF
HGF Limited
4th Floor, 1 City Square
Leeds LS1 2ES (GB)

(54) **COMPOSITION FOR POSITIVE ELECTRODES OF NONAQUEOUS ELECTROLYTE SECONDARY BATTERIES, POSITIVE ELECTRODE SHEET, AND NONAQUEOUS ELECTROLYTE SECONDARY BATTERY**

(57) Provided are a composition for a positive electrode containing a positive electrode active material consisting of a large particle group A having a particle diameter of 5.0 μm or more and a small particle group B having a particle diameter of less than 5.0 μm, in which, in a number-based particle size distribution of the positive electrode active material, in a case where the total frequency is set to 100%, a frequency of the large particle group A is 60% or more and a frequency of the small particle group B is 40% or less, and a surface tension $\gamma B$ (mN/m) of the small particle group B with respect to N-methylpyrrolidone satisfies an expression B1: $15.0 \leq \gamma B \leq 40.0$; a positive electrode sheet including a positive electrode active material layer formed of the composition for a positive electrode; and a non-aqueous electrolytic solution secondary battery using the positive electrode sheet.

## FIG. 1

EP 4 723 208 A1

**Description**

**BACKGROUND OF THE INVENTION**

1. Field of the Invention

The present invention relates to a composition for a positive electrode of a non-aqueous electrolytic solution secondary battery, a positive electrode sheet using the composition, and a non-aqueous electrolytic solution secondary battery using the positive electrode sheet.

2. Description of the Related Art

A non-aqueous electrolytic solution secondary battery typified by a lithium ion secondary battery has high energy density and is excellent in storage performance, low-temperature operability, and the like, and thus is widely used for portable electronic apparatuses such as a mobile phone and a notebook computer. In addition, the battery has been scaled up and used in transportation equipment such as automobiles, and the use of the battery as a storage device for nighttime power, power generation by natural energy, and the like has also been promoted.

An electrode (a positive electrode and a negative electrode) of the non-aqueous electrolytic solution secondary battery generally has an electrode active material layer (a positive electrode active material layer or a negative electrode active material layer), and the electrode active material layer contains electrode active material particles capable of intercalating and deintercalating lithium ions during charging and discharging. The electrode active material layer is generally formed by preparing a slurry (composition) containing a constitutional component of the electrode active material layer, such as an electrode active material, and applying and drying the slurry.

Regarding the improvement of the performance of the non-aqueous electrolytic solution secondary battery, studies have been made focusing on the positive electrode active material layer.

For example, JP2015-230748A discloses a method for manufacturing an electrode for a lithium ion secondary battery, the method including:

preparing first composite particles containing a first active material and a first binder and second composite particles containing a second active material and a second binder, the second composite particles having higher fluidity than the first composite particles;

setting a band-shaped collector portion at at least one end part of a long collector along a longitudinal direction of the collector, and supplying the first composite particles to a first portion which is a band-shaped region adjacent to the collector portion;

supplying the second composite particles to a second portion which is a region on a width direction center side orthogonal to the longitudinal direction of the collector with respect to the first portion; and

rolling the first and second composite particles supplied onto the collector to form an active material layer,

in which, in Examples, a positive electrode sheet having a positive electrode active material layer, which is formed by the manufacturing method, is evaluated.

According to the technique disclosed in JP2015-230748A, it is possible to manufacture an electrode while suppressing peeling of the active material layer or sliding of the active material layer.

In addition, WO2018/155314A discloses a non-aqueous electrolyte storage element including:

a conductive substrate; and

a positive electrode having a positive electrode mixture layer, which is laminated on the substrate,

in which the substrate is formed of an aluminum alloy in which a content proportion of elements other than aluminum is 1% by mass or more,

the positive electrode mixture layer contains, as a positive electrode active material, particles A and particles B, which have different particle diameters,

a particle diameter ratio (A/B) of the particle diameter of the particles A to the particle diameter of the particles B is 3 or more, and

a tensile breaking strength of the substrate is 250 MPa or more.

According to the technique disclosed in WO2018/155314A, it is possible to suppress an increase in resistance due to repeated charge and discharge.

## SUMMARY OF THE INVENTION

In recent years, with the expansion of the application of the non-aqueous electrolytic solution secondary battery, the non-aqueous electrolytic solution secondary battery is required to have a high energy density (high capacity). For example, the non-aqueous electrolytic solution secondary battery is used as a power supply for an electric vehicle (EV) and a drone, and it is important to increase the capacity of the non-aqueous electrolytic solution secondary battery in order to improve a traveling range of the EV vehicle or to improve a flight time of the drone.

In order to increase a capacity (increase an energy density) of the non-aqueous electrolytic solution secondary battery, in the positive electrode active material layer, there is an attempt to increase the content of the positive electrode active material which stores ions and to suppress the content of the binder. However, in a case where, in order to increase the amount of the positive electrode active material, the addition amount of the binder in a composition for a positive electrode, which is used for forming the positive electrode active material layer, or in the positive electrode active material layer is reduced or the composition for a positive electrode is thickly applied to form the thick positive electrode active material layer, the end part of the formed positive electrode active material layer partially collapses in the manufacturing process of the non-aqueous electrolytic solution secondary battery, and there is a problem that it is difficult to form the positive electrode active material layer having a desired shape (for example, a rectangular cross section).

An object of the present invention is to provide a composition for a positive electrode, which can obtain a non-aqueous electrolytic solution secondary battery having excellent formability (shape stability) of a positive electrode active material layer and exhibiting excellent battery performance. Another object of the present invention is to provide a positive electrode sheet including the positive electrode active material layer formed of the composition for a positive electrode, and a non-aqueous electrolytic solution secondary battery in which the positive electrode sheet is incorporated into a positive electrode.

As a result of intensive studies in view of the above-described objects, the present inventor has found that, in a case where a positive electrode active material having a specific particle size distribution is used as a positive electrode active material contained in the composition for a positive electrode, which is used for forming a positive electrode active material layer, and a surface tension of the positive electrode active material on a specific small particle side is increased to a specific range, the collapse of the obtained positive electrode active material layer is suppressed even in a case where an amount of a binder in the composition for a positive electrode or the positive electrode active material layer is reduced or the positive electrode active material layer is formed to have a large thickness, and the positive electrode active material layer having a desired shape can be efficiently formed, so that the capacity of the obtained non-aqueous electrolytic solution secondary battery can be achieved at a higher level. The present invention has been completed by further repeating studies on the basis of the above-described finding.

The above-described objects of the present invention have been achieved by the following means.

[1] A composition for a positive electrode of a non-aqueous electrolytic solution secondary battery, the composition comprising:

a positive electrode active material consisting of a large particle group A having a particle diameter of 5.0 $\mu$m or more and a small particle group B having a particle diameter of less than 5.0 $\mu$m,
in which, in a number-based particle size distribution of the positive electrode active material, in a case where a total frequency is set to 100%, a frequency of the large particle group A is 60% or more and a frequency of the small particle group B is 40% or less, and
a surface tension $\gamma$B (mN/m) of the small particle group B with respect to N-methylpyrrolidone satisfies the following expression B1,
the expression B1:

$$15.0 \leq \gamma B \leq 40.0.$$

[2] The composition for a positive electrode according to [1],

in which a surface tension $\gamma$A (mN/m) of the large particle group A with respect to N-methylpyrrolidone satisfies the following expression A1,
the expression A1:

$$15.0 \leq \gamma A \leq 25.0.$$

[3] The composition for a positive electrode according to [1] or [2],

in which the surface tension $\gamma A$ of the large particle group A satisfies the following expression A2,
the expression A2:

$$18.0 \leq \gamma A \leq 22.0.$$

[4] The composition for a positive electrode according to any one of [1] to [3],

in which the surface tension $\gamma B$ of the small particle group B satisfies the following expression B2,
the expression B2:

$$25.0 \leq \gamma B \leq 35.0.$$

[5] The composition for a positive electrode according to any one of [1] to [4],
in which a maximum filling rate calculated from a volume-based cumulative particle size distribution of the positive electrode active material is 80% or more.
[6] A positive electrode sheet comprising:
a positive electrode active material layer formed of the composition for a positive electrode according to any one of [1] to [5].
[7] A non-aqueous electrolytic solution secondary battery comprising:
the positive electrode sheet according to [6] as a positive electrode.

In the description of the present invention, a numerical range represented by using "to" means a range including numerical values described before and after "to" as a lower limit value and an upper limit value.

In the present invention, "non-aqueous electrolytic solution" means an electrolytic solution which does not substantially contain water. That is, the "non-aqueous electrolytic solution" may contain a trace of water within a range that does not impair the effects of the present invention. The concentration of water in the "non-aqueous electrolytic solution" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous electrolytic solution.

In the present invention, "non-aqueous solvent" also means a solvent which does not substantially contain water. That is, the "non-aqueous solvent" may contain a trace of water within a range that does not impair the effects of the present invention. The concentration of water in the "non-aqueous solvent" in the present invention is 200 ppm (based on mass) or less, preferably 100 ppm or less, and more preferably 20 ppm or less. The concentration of water is usually 1 ppm or more, because it is practically difficult to make an absolutely anhydrous non-aqueous solvent.

The composition for a positive electrode of the non-aqueous electrolytic solution secondary battery according to the aspect of the present invention can be used for forming a positive electrode active material layer which is less likely to collapse. With the positive electrode sheet according to the aspect of the present invention, it is possible to obtain a non-aqueous electrolytic solution secondary battery having excellent shape stability of the positive electrode active material layer and exhibiting excellent battery performance, by incorporating the positive electrode sheet into the non-aqueous electrolytic solution secondary battery. The non-aqueous electrolytic solution secondary battery according to the aspect of the present invention has excellent shape stability of the positive electrode active material layer and excellent battery performance.

## BRIEF DESCRIPTION OF THE DRAWINGS

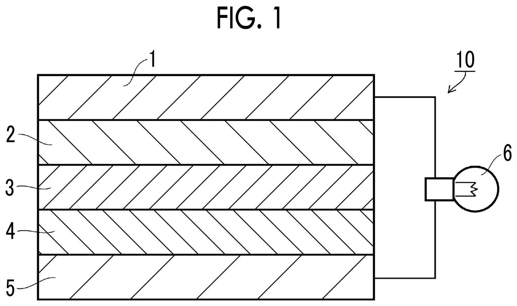

FIG. 1 is a longitudinal cross-sectional view schematically showing a basic lamination configuration of an embodiment of the secondary battery according to the present invention.

## DESCRIPTION OF THE PREFERRED EMBODIMENTS

Preferred embodiments of the present invention will be described, but the present invention is not limited to these embodiments except as specified in the present invention.

[Composition for positive electrode]

The composition for a positive electrode a non-aqueous electrolytic solution secondary battery according to the present invention (hereinafter, also referred to as "composition for a positive electrode according to the embodiment of the present invention") contains a positive electrode active material consisting of a large particle group A having a particle diameter of 5.0 μm or more and a small particle group B having a particle diameter of less than 5.0 μm. With regard to the positive electrode active material, in a number-based particle size distribution of the positive electrode active material, in a case where the total frequency is set to 100%, a frequency of the large particle group A is 60% or more and a frequency of the small particle group B is 40% or less, and a surface tension $\gamma B$ (mN/m) of the small particle group B with respect to N-methylpyrrolidone satisfies the following expression B1.

$$\text{Expression B1: } 15.0 \leq \gamma B \leq 40.0$$

The composition for a positive electrode according to the embodiment of the present invention can be suitably used as a material for forming a positive electrode active material layer constituting a non-aqueous electrolytic solution secondary battery. The composition for a positive electrode according to the embodiment of the present invention is usually a slurry in which solid particles such as a positive electrode active material and a conductive auxiliary agent are dispersed in a liquid medium.

In the composition for a positive electrode according to the embodiment of the present invention, since the positive electrode active material consists of the large particle group A and the small particle group B and the surface tension of the small particle group B is controlled within the above-described range, surface activity of the small particle group B is increased, and interactivity (adhesiveness) between the solid particles or between the solid particles and the binder is effectively increased. As a result, even in a case where the positive electrode active material layer to be formed has a film thickness of approximately 250 μm or the amount of the binder used is reduced, the formed positive electrode active material layer has excellent shape stability, and the battery capacity of the non-aqueous electrolytic solution secondary battery to be obtained can be sufficiently increased.

The positive electrode active material constituting the composition for a positive electrode according to the embodiment of the present invention consists of the large particle group A having a particle diameter of 5.0 μm or more and the small particle group B having a particle diameter of less than 5.0 μm. That is, the positive electrode active material used in the present invention is roughly classified into a large particle group having a particle diameter equal to or larger than a threshold value of 5.0 μm, and a small particle group having a particle diameter smaller than the threshold value.

The above-described particle diameter can be measured according to a measurement method of a number-based particle size distribution using a particle diameter measuring device, which will be described later.

In the number-based particle size distribution of the positive electrode active material, in a case where the total frequency (total number of particles of the positive electrode active material particles) is set to 100%, the frequency of the large particle group A (number of particles of the positive electrode active material classified into the large particle group A) is preferably 60% to 90%, more preferably 60% to 80%, and still more preferably 65% to 75%.

In the number-based particle size distribution of the positive electrode active material, in a case where the total frequency (total number of particles of the positive electrode active material particles) is set to 100%, the frequency of the small particle group B (number of particles of the positive electrode active material classified into the small particle group B) is preferably 10% to 40%, more preferably 20% to 40%, and still more preferably 25% to 35%.

A method of controlling the frequencies of the large particle group A and the small particle group B in the positive electrode active material is not particularly limited, and for example, they can be controlled by mixing positive electrode active materials having different median diameters.

The number-based particle size distribution of the positive electrode active material can be obtained by a method described in Examples.

In the positive electrode active material contained in the composition for a positive electrode according to the embodiment of the present invention, the surface tension of the small particle group B with respect to N-methylpyrrolidone (NMP) is controlled to satisfy the expression B1: $15.0 \leq \gamma B \leq 40.0$. In a case where the surface tension $\gamma B$ is too low, the interactivity between the particles of the small particle group B or between the particles and the binder cannot be increased to a desired level, and thus the positive electrode active material layer to be formed is likely to collapse. On the other hand, in a case where the surface tension $\gamma B$ is too high, the positive electrode active material layer to be formed is powdery, and thus also likely to collapse.

The surface tension $\gamma B$ of the small particle group B with respect to N-methylpyrrolidone preferably satisfies the following expression B2, and more preferably satisfies an expression B3.

$$\text{Expression B2: } 25.0 \leq \gamma B \leq 35.0$$

$$\text{Expression B3: } 28.0 \leq \gamma B \leq 34.0$$

The surface tension (surface free energy) of the small particle group B with respect to NMP means a surface tension of the entire small particle group B with respect to NMP, and can be measured by a permeation rate method.

In the present invention, the surface tension of the small particle group B is defined with respect to NMP, but the dispersion medium used in the composition for a positive electrode according to the embodiment of the present invention is not limited to NMP; and various dispersion media described later can be used.

Details of a method of measuring the surface tension of the positive electrode active material will be described below.

-Method of measuring surface tension of positive electrode active material-

The measurement is performed using a tensiometer (device name: DY-700 (trade name), manufactured by Kyowa Interface Science Co., Ltd.) and a powder contact angle measuring kit. 2.0 g of a powder of the positive electrode active material is packed in a cylinder having an inner diameter of 1 cm (cross-sectional area S: 0.785 cm$^2$), and the powder is compressed and filled to a height of 1.5 cm using a cylindrical rod having the same diameter as the inner diameter of the cylinder. The above-described cylinder is set on the above-described powder contact angle measuring kit, and the powder in the cylinder is allowed to permeate hexadecane for 5 minutes (time t = 5 minutes (300 seconds)), and a permeation weight $W_L$ (g) is measured to calculate $W_L^2/t$. The $W_L^2/t$ obtained in this way is substituted into the following Washburn's equation together with a liquid density $\rho_L$, a liquid surface tension $\gamma_L$, and a liquid viscosity $\eta_L$ of hexadecane, and $\cos\theta = 1$, thereby determining a constant $\varepsilon^2 r$. (the unit of r in the above-described Washburn's equation is "m", and the void ratio $\varepsilon$ is a value in a range of 0.0 to 1.0).

The liquid density $\rho_L$, the liquid surface tension $\gamma_L$, and the liquid viscosity $\eta_L$ of hexadecane are set to the following constants with reference to the values in the literature.

Hexadecane: $\rho_L$ = 0.775 g/ml, $\gamma_L$ = 27.6 mN/m, $\eta_L$ = 3.5 mPa·s

$$\text{Washburn's equation}$$

$$\frac{W_L^2}{t} = (S \cdot \varepsilon \cdot \rho_L)^2 \frac{r \cdot \gamma_L \cdot \cos\theta}{2\eta_L}$$

$W_L$: penetration weight
t: time
S: cross-sectional area of cell (powder-packed section)
$\varepsilon$: porosity
$\rho_L$: liquid density
r: capillary radius formed by particles within powder layer
$\gamma_L$: liquid surface tension
$\eta_L$: liquid viscosity
$\theta$: contact angle between liquid and solid surface

Subsequently, the permeation weight $W_L$ (g) is measured in the same manner as described above, except that the NMP solvent is used instead of hexadecane, and $W_L^2/t$ calculated from the measured weight and the permeation time and $\varepsilon^2 r$ obtained as described above are substituted into the following Washburn's equation together with $\rho_L$, $\gamma_L$, and $\eta_L$ of NMP to derive a contact angle $\cos\theta$ of the positive electrode active material with respect to NMP.

NMP: $\rho_L$ = 1.03 g/ml, $\gamma_L$ = 40.3 mN/m, $\eta_L$ = 1.65 mPa·s

The above-described operation (measurement of the permeation weight) is performed four times (N = 4) to obtain an average value of the contact angles $\cos\theta$ with respect to NMP.

The obtained contact angle $\cos\theta$ is substituted into the following equation to obtain the surface tension $\gamma$B.

$$\gamma B = \gamma_{NMP} \times \cos\theta$$

Here, $\gamma_{NMP}$ is the surface tension (40.3 mN/m) of N-methylpyrrolidone, which is a constant.

The above-described surface tension of the small particle group B with respect to NMP can be controlled by treating at least the positive electrode active material classified into the small particle group B with a surface smoothing treatment in advance, and blending the positive electrode active material into the composition for a positive electrode. Examples of the surface smoothing treatment include mixing. The atmosphere during the surface smoothing treatment is not particularly limited, but it is preferable to perform the surface smoothing treatment in an inert gas atmosphere from the viewpoint of preventing oxidation or the like of the surface of the active material particles during the treatment. Examples thereof include mixing in an argon atmosphere, a nitrogen atmosphere, a nitrogen-hydrogen mixed atmosphere, and the like. A treatment device in the above-described surface smoothing treatment is not particularly limited, and examples thereof include a planetary ball mill (trade name: P-5, manufactured by FRITSCH), a jet mill crusher (trade name: JETMILL100, manufactured by Powrex corp.), a powder treatment device Nobilta (trade name: NOB MINI, manufactured by Hosokawa Micron Group), and a powder treatment device COMPOSI (trade name: CP15, manufactured by NIPPON COKE & ENGINEERING. CO., LTD.). Treatment conditions in the above-described surface smoothing treatment are not particularly limited, and for example, mixing can be performed at a rotation speed of 5,000 to 9,000 rpm and a treatment time of 5 to 20 minutes in a nitrogen atmosphere using a powder treatment device Nobilta (trade name: NOB MINI, manufactured by Hosokawa Micron Group).

As a result of the surface smoothing treatment, a surface having high activity is exposed on the surface of the positive electrode active material, and the surface tension is increased.

In the composition for a positive electrode according to the embodiment of the present invention, a surface tension $\gamma A$ (mN/m) of the large particle group A with respect to N-methylpyrrolidone (NMP) preferably satisfies the following expression A0, preferably satisfies an expression A1, and more preferably satisfies an expression A2.

$$\text{Expression A0: } 10.0 \leq \gamma A \leq 25.0$$

$$\text{Expression A1: } 15.0 \leq \gamma A \leq 25.0$$

$$\text{Expression A2: } 18.0 \leq \gamma A \leq 22.0$$

In the present invention, it is considered that the surface tension $\gamma B$ of the small particle group B has a greater influence on the particle interaction than the surface tension $\gamma A$ of the large particle group A because the specific surface area is larger. However, the effect can be further enhanced by setting the surface tension $\gamma B$ of the small particle group B within the above-described range and further setting the surface tension $\gamma A$ of the large particle group A within the above-described range.

The surface tension of the large particle group A with respect to NMP can be controlled within the above-described range by performing the surface smoothing treatment on the large particle group A, as in the small particle group B. The surface smoothing treatment is the same as that described in the small particle group B.

The surface tension $\gamma A$ of the large particle group A with respect to N-methylpyrrolidone (NMP) means a surface tension of the entire large particle group A with respect to NMP, and can be measured in the same manner as the surface tension $\gamma B$ of the small particle group B with respect to NMP.

In the composition for a positive electrode according to the embodiment of the present invention, a maximum filling rate of the positive electrode active material, which is calculated from a volume-based cumulative particle size distribution of the positive electrode active material, is preferably 75% or more, and more preferably 80% or more. By controlling the particle size distribution of the positive electrode active material in this way, a filling rate of the positive electrode active material can be increased in the positive electrode active material layer to be obtained.

The maximum filling rate is an estimated value calculated based on data of the volume-based cumulative particle size distribution of the positive electrode active material contained in the composition for a positive electrode according to the embodiment of the present invention.

Specifically, the maximum filling rate can be calculated by a method described in Examples of the present invention.

A specific surface area of the small particle group B is preferably 8.0 to 13.0 $m^2/g$ and more preferably 9.0 to 12.5 $m^2/g$.

A specific surface area of the large particle group A is preferably 5.0 to 8.5 $m^2/g$ and more preferably 5.2 to 8.3 $m^2/g$.

Each of the specific surface areas of the large particle group A and the small particle group B can be measured by a BET method as follows.

-BET specific surface area measuring method-

0.2 g of the sample is dried at 120°C for 6 hours, and then measured under the following measurement conditions using BELSORP mini (trade name) manufactured by MicrotracBEL Corp.

· Adsorption temperature: 77 K
· Adsorbed gas: $N_2$
· Equilibrium time: 100 seconds
· Purge gas: He

As a method for obtaining the particle size distribution consisting of the large particle group A and the small particle group B defined in the present invention, a positive electrode active material having a large median diameter (D50) and a positive electrode active material having a small median diameter (D50) can be mixed and used as the positive electrode active material.

The median diameter (D50) of the positive electrode active material having a large median diameter (D50) (positive electrode active material a, large particle group a) described above can be set to 6.0 to 20.0 $\mu$m, and is preferably 7.0 to 15.0 $\mu$m, more preferably 8.0 to 14.0 $\mu$m, and still more preferably 8.3 to 13.0 $\mu$m.

The median diameter (D50) of the positive electrode active material having a small median diameter (D50) (positive electrode active material b, small particle group b) described above can be set to 0.1 to 4.0 $\mu$m, and is preferably 0.2 to 3.0 $\mu$m, more preferably 0.5 to 2.0 $\mu$m, and still more preferably 0.8 to 1.2 $\mu$m.

In order to set the positive electrode active material a (large particle group a) and the positive electrode active material b (small particle group b) to the predetermined median diameters (D50), a normal pulverizer or classifier may be used. A positive electrode active material obtained using a baking method may be used after being washed with water, an acidic aqueous solution, an alkaline aqueous solution, or an organic solvent.

The median diameters (D50) of the positive electrode active material a (large particle group a) and the positive electrode active material b (small particle group b) can be measured by the following method.

-Median diameter (D50) measuring method-

The positive electrode active material is dispersed in water, and a particle diameter value (median diameter D50 on a volume basis in water) obtained by measuring a particle diameter with a laser diffraction/scattering-type particle size distribution analyzer (for example, Particle LA-960V2 manufactured by HORIBA, Ltd.) is adopted. The same applies to a median diameter (D50) of solid particles other than the positive electrode active material.

The composition for a positive electrode according to the embodiment of the present invention can contain the same components as a normal composition for a positive electrode, in addition to the above-described positive electrode active material consisting of the large particle group A and the small particle group B. For example, a conductive auxiliary agent, a binder, a dispersion medium, or the like can be contained.

Each component constituting the composition for a positive electrode according to the embodiment of the present invention will be described in detail.

<Positive electrode active material>

As the positive electrode active material, a positive electrode active material capable of reversibly intercalating and deintercalating lithium ions is preferable. The material is not particularly limited, and examples thereof include transition metal oxides, organic matter, substances capable of being complexed with Li, such as sulfur, and complexes of sulfur and metal.

Among these, as the positive electrode active material, lithium-containing transition metal oxides are preferably used, and lithium-containing transition metal oxides having a transition metal element $M^a$ (one or more elements selected from Co, Ni, Fe, Mn, Cu, and V) are more preferable. In addition, an element $M^b$ (an element of Group 1 (Ia) of the periodic table other than lithium, an element of Group 2 (IIa), or an element such as Al, Ga, In, Ge, Sn, Pb, Sb, Bi, Si, P, and B) may be mixed into the lithium-containing transition metal oxide. The mixed amount is preferably 0 to 30 mol% with respect to the amount (100 mol%) of the transition metal element $M^a$. It is more preferable that the transition metal oxide is synthesized by mixing the above-described components such that a molar ratio Li/$M^a$ is 0.3 to 2.2.

Specific examples of the lithium-containing transition metal oxide include (MA) lithium-containing transition metal oxides having a bedded salt-type structure, (MB) lithium-containing transition metal oxides having a spinel-type structure, (MC) lithium-containing transition metal phosphoric acid compounds, (MD) lithium-containing transition metal halogenated phosphoric acid compounds, and (ME) lithium-containing transition metal silicate compounds.

Specific examples of the lithium-containing transition metal oxide having a bedded salt-type structure (MA) include $LiCoO_2$ (lithium cobalt oxide [LCO]), $LiNi_2O_2$ (lithium nickelate), $LiNi_{0.85}Co_{0.10}Al_{0.05}O_2$ (lithium nickel cobalt aluminum oxide [NCA]), $LiNi_{1/3}Co_{1/3}Mn_{1/3}O_2$ (lithium nickel manganese cobalt oxide [NMC]), and $LiNi_{0.5}Mn_{0.5}O_2$ (lithium nickel manganese oxide).

Specific examples of the lithium-containing transition metal oxide having a spinel-type structure (MB) include $LiMn_2O_4$ (LMO), $LiCoMnO_4$, $Li_2FeMn_3O_8$, $Li_2CuMn_3O_8$, $Li_2CrMn_3O_8$, and $Li_2NiMn_3O_8$.

Examples of the lithium-containing transition metal phosphoric acid compound (MC) include olivine-type iron phosphate salts such as $LiFePO_4$ and $Li_3Fe_2(PO_4)_3$; cobalt phosphates such as $LiCoPO_4$; iron pyrophosphates such as $LiFeP_2O_7$; and monoclinic NASICON-type vanadium phosphate salts such as $Li_3V_2(PO_4)_3$ (lithium vanadium phosphate).

Examples of the lithium-containing transition metal halogenated phosphoric acid compound (MD) include iron fluorophosphates such as $Li_2FePO_4F$, manganese fluorophosphates such as $Li_2MnPO_4F$, and cobalt fluorophosphates such as $Li_2CoPO_4F$.

Examples of the lithium-containing transition metal silicate compound (ME) include $Li_2FeSiO_4$, $Li_2MnSiO_4$, and $Li_2CoSiO_4$.

In the present invention, as the positive electrode active material, the lithium-containing transition metal oxide having a bedded salt-type structure (MA) or the lithium-containing transition metal phosphoric acid compound (MC) is preferable, $LiNi_{1/3}Co_{1/3}Mn_{1/3}O_2$ or $LiFePO_4$ is more preferable, and $LiFePO_4$ is still more preferable.

A chemical formula of a compound obtained by the above-described baking method can be calculated using an inductively coupled plasma (ICP) emission spectroscopy as a measuring method from the mass difference of powder before and after baking as a convenient method.

A surface of the positive electrode active material may be coated with an oxide such as another metal oxide and a carbon-based material. These surface coating layers can function as an interface resistance-stabilizing layer.

Examples of a surface coating material include a metal oxide containing Ti, Nb, Ta, W, Zr, Al, Si, or Li. Examples thereof include titanium oxide spinel, tantalum-based oxides, niobium-based oxides, and lithium niobate-based compounds; and specific examples thereof include $Li_4Ti_5O_{12}$, $Li_2Ti_2O_5$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, $Li_2MoO_4$, $Li_3BO_3$, $LiBO_2$, $Li_2CO_3$, $Li_2SiO_3$, $SiO_2$, $TiO_2$, $ZrO_2$, $Al_2O_3$, $B_2O_3$, and $Li_3AlF_6$. In addition, a carbon-based material such as C, SiC, and SiOC (carbon-added silicon oxide) can also be used as the surface coating material.

From the viewpoint of increasing the electron conductivity to a desired level, it is preferable that the surface of the positive electrode active material is coated with the carbon-based material. In this case, it is preferable that the surface of the positive electrode active material is coated with carbon (C). The surface coating with carbon can be formed by firing the positive electrode active material in the presence of an additive (organic substance) serving as a carbon source. As the additive, for example, a styrene-maleic acid anhydride copolymer, polystyrene, polycarbonate, or the like can be used.

In addition, the surface of the positive electrode active material may be subjected to a surface treatment with sulfur or phosphorus.

Furthermore, a surface treatment may be carried out on surfaces of particles of the positive electrode active material with an actinic ray or an active gas (plasma or the like) before or after the coating of the surfaces.

One kind of the above-described positive electrode active material may be used alone, or two or more kinds thereof may be used in combination.

A content of the positive electrode active material in the composition for a positive electrode is preferably 96.00% to 99.50% by mass, more preferably 96.00% to 99.40% by mass, still more preferably 97.00% to 99.40% by mass, even more preferably 98.00% to 99.30% by mass, even still more preferably 98.50% to 99.20% by mass, and particularly preferably 99.00% to 99.15% by mass in the solid content of the composition.

<Conductive auxiliary agent>

The composition for a positive electrode according to the embodiment of the present invention can contain a conductive auxiliary agent.

As the conductive auxiliary agent, a conductive auxiliary agent which is known as a general conductive auxiliary agent can be used. For example, the conductive auxiliary agent may be graphite such as natural graphite and artificial graphite; carbon black such as acetylene black, ketjen black, and furnace black; irregular carbon such as needle cokes; a carbon fiber such as vapor-grown carbon fiber and carbon nanotube; a carbonaceous material such as graphene and fullerene which are electron-conductive materials; metal powder or a metal fiber of copper, nickel, or the like; and a conductive polymer such as polyaniline, polypyrrole, polythiophene, polyacetylene, and a polyphenylene derivative.

In the present invention, the conductive auxiliary agent is preferably a carbonaceous material, preferably carbon blacks, and more preferably ketjen black.

In a case where the positive electrode active material and the conductive auxiliary agent are used in combination, among the above-described conductive auxiliary agents, a conductive auxiliary agent which does not intercalate and deintercalate Li and does not function as an active material at the time of charging and discharging a battery is regarded as the conductive auxiliary agent. Therefore, among the conductive auxiliary agents, a conductive auxiliary agent which can function as the active material in the active material layer at the time of charging and discharging of the battery is classified as the active material, not as the conductive auxiliary agent. Whether or not the conductive auxiliary agent functions as the active material at the time of charging and discharging of the battery is not unambiguously determined, and determined by a combination with the active material.

Examples of a commercially available product of the conductive auxiliary agent include the following.

Ketjen black: Carbon ECP (specific surface area = 890 m$^2$/g), Carbon ECP600JD (specific surface area = 1,480 m$^2$/g), and Carbon ECP200L (specific surface area = 430 m$^2$/g) (all manufactured by LION SPECIALTY CHEMICALS CO., LTD.)

Carbon black: LITX300 (specific surface area = 180 m$^2$/g) and LITX-HP (specific surface area = 100 m$^2$/g) (both manufactured by Cabot Corporation)

Carbon nanotube (CNT): BT1001M (specific surface area = 272 m$^2$/g) and BT1003M (specific surface area = 230 m$^2$/g) (both manufactured by LG Chem); JENOTUBE6A (specific surface area = 680 m$^2$/g) and JENOTUBE10B (specific surface area = 230 m$^2$/g) (both JEIO)

One kind of conductive auxiliary agent or two or more kinds of conductive auxiliary agents may be used.

A shape of the conductive auxiliary agent is not particularly limited, but is preferably a particulate shape.

A median diameter (D50) of the conductive auxiliary agent is not particularly limited. For example, the median diameter is preferably 0.01 to 50 $\mu$m, more preferably 0.1 to 10 $\mu$m, and still more preferably 0.2 to 2.0 $\mu$m.

The conductive auxiliary agent may be subjected to a surface treatment.

A method of the surface treatment is not particularly limited, and a surface treatment using a chemical treatment agent or an atomic layer deposition (ALD) treatment is preferable.

As the chemical treatment agent, an organic silicon compound (more preferably a silane coupling agent), an organic phosphonic acid compound, or the like is preferable; and examples thereof include methyltrimethoxysilane (MTMS), octadecyltrimethoxysilane, hexamethyldisilazane, tetraethoxysilane, trifluoropropyltrimethoxysilane, vinyltrimethoxysilane, phenyltrimethoxysilane, 3-aminopropyltriethoxysilane, 1H,1H,2H,2H-perfluorooctyltriethoxysilane, trimethoxy(octyl)silane, 1H,1H,2H,2H-perfluorooctane phosphonic acid, 1-octyl phosphonic acid, and perfluoropolyether triethoxysilane (KY1903 (trade name)).

In the ALD treatment, examples of a layer to be deposited include HfO$_2$, SiO$_2$, ZrO$_2$, Ta$_2$O$_5$, and TiO$_2$.

A content (% by mass) of the conductive auxiliary agent is preferably 0.03% to 4.00% by mass, more preferably 0.03% to 2.00% by mass, still more preferably 0.05% to 1.00% by mass, and particularly preferably 0.10% to 0.80% by mass in the solid content of the composition for a positive electrode.

<Dispersion medium>

The composition for a positive electrode according to the embodiment of the present invention can contain a dispersion medium.

The dispersion medium is not particularly limited. For example, water or a non-aqueous solvent may be used.

As the non-aqueous solvent, aprotic organic solvents are preferable, and among these, an aprotic organic solvent having 2 to 10 carbon atoms is more preferable.

Examples of such a non-aqueous solvent include a chain-like or cyclic carbonate compound, a lactone compound, a chain-like or cyclic ether compound, an ester compound, a nitrile compound, an amide compound, an oxazolidinone compound, a nitro compound, a chain-like or cyclic sulfone or sulfoxide compound, and a phosphoric acid ester compound.

A compound having an ether bond, a carbonyl bond, an ester bond, or a carbonate bond is preferable. These compounds may have a substituent.

Examples of the non-aqueous solvent include ethylene carbonate, fluorinated ethylene carbonate, vinylene carbonate, propylene carbonate, butylene carbonate, dimethyl carbonate, diethyl carbonate, ethyl methyl carbonate, methyl propyl carbonate, $\gamma$-butyrolactone, $\gamma$-valerolactone, 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, methyl acetate, ethyl acetate, methyl propionate, ethyl propionate, methyl butyrate, methyl isobutyrate, methyl trimethyl acetate, ethyl trimethyl acetate, acetonitrile, glutaronitrile, adiponitrile, methoxyacetonitrile, 3-methoxypropionitrile, N,N-dimethylformamide, N-methylpyrrolidone (NMP), N-methyloxazolidinone, N,N'-dimethylimidazolidinone, nitromethane, nitroethane, sulfolane, trimethyl phosphate, dimethylsulfoxide, and dimethylsulfoxide phosphate. These may be used alone or in combination of two or more.

The non-aqueous solvent used in the present invention is not limited to these solvents.

In the present invention, the dispersion medium is preferably N-methylpyrrolidone (NMP).

In the composition for a positive electrode according to the embodiment of the present invention, a content of solid contents (components other than the dispersion medium (solvent)) is preferably 70% by mass or more, more preferably 72% by mass or more, still more preferably 74% by mass or more, and even more preferably 78% by mass or more. The content of the solid content is preferably 70% to 95% by mass, more preferably 70% to 90% by mass, still more preferably 72% to 87% by mass, even more preferably 74% to 85% by mass, and particularly preferably 78% to 83% by mass.

<Other components>

The composition for a positive electrode according to the embodiment of the present invention can contain, as desired, a binder, an ionic liquid, a thickener, an antifoaming agent, a leveling agent, a dehydrating agent, an antioxidant, or the like. These components can be used as those which are usually used in the non-aqueous electrolytic solution secondary battery.

As the binder, polyvinylidene fluoride (PVDF) or a styrene-butadiene copolymer (SBR) is preferable.

A content of the binder in the composition for a positive electrode according to the embodiment of the present invention is preferably 0.10% to 3.00% by mass, more preferably 0.20% to 2.00% by mass, still more preferably 0.20% to 1.00% by mass, and particularly preferably 0.25% to 0.40% by mass in the solid content of the composition for a positive electrode.

<Method for preparing composition for positive electrode>

The composition for a positive electrode according to the embodiment of the present invention can be prepared by mixing the positive electrode active material consisting of the large particle group A and the small particle group B with other optional components, for example, using various mixers usually used, thereby obtaining a mixture, preferably a slurry.

[Positive electrode sheet]

The positive electrode sheet according to the embodiment of the present invention is a positive electrode sheet including a positive electrode active material layer formed of the composition for a positive electrode according to the embodiment of the present invention, and is a positive electrode sheet suitable as a positive electrode sheet of a non-aqueous electrolytic solution secondary battery.

In the positive electrode sheet according to the embodiment of the present invention, the positive electrode active material contained in the positive electrode active material layer consists of the large particle group A having a particle diameter of 5.0 $\mu$m or more and the small particle group B having a particle diameter of less than 5.0 $\mu$m, in the number-based particle size distribution of the positive electrode active material, in a case where the total frequency is set to 100%, the frequency of the large particle group A is 60% or more and the frequency of the small particle group B is 40% or less, and the surface tension $\gamma$B (mN/m) of the small particle group B with respect to N-methylpyrrolidone satisfies the above expression B1.

In the present invention, the term "positive electrode sheet" simply includes both an aspect in which the positive electrode sheet is incorporated as a constituent member in a non-aqueous electrolytic solution secondary battery (a state of being incorporated into a secondary battery) and an aspect in which the positive electrode sheet is a positive electrode material before being incorporated into the non-aqueous electrolytic solution secondary battery. That is, a structure (area, thickness, and the like) of the positive electrode sheet may be a structure which is used as the positive electrode, or a structure which can be processed into the structure which is used as the positive electrode.

It is sufficient that the positive electrode sheet according to the embodiment of the present invention includes the positive electrode active material layer formed of the composition for a positive electrode according to the embodiment of the present invention, and it may have a form in which the positive electrode active material layer and a positive electrode collector are laminated. More specifically, the positive electrode active material layer may be laminated on both surfaces of the positive electrode collector, or the positive electrode active material layer may be laminated on one surface of the positive electrode collector. The positive electrode sheet is usually a sheet having a configuration in which the positive electrode active material layer is laminated on the positive electrode collector.

The positive electrode active material layer may be composed of a single layer or may be composed of a plurality of layers.

The positive electrode sheet may further include other layers as necessary. Examples of the other layers include a protective layer (peeling sheet) and a coating layer. In the positive electrode sheet according to the embodiment of the present invention, it is preferable that the positive electrode active material layer is laminated in a state of being in direct contact with the positive electrode collector.

A thickness of the positive electrode active material layer is preferably 120 $\mu$m or more, and it can be set to 120 to 500 $\mu$m, preferably 150 to 450 $\mu$m, more preferably 180 to 400 $\mu$m, and still more preferably 200 to 350 $\mu$m.

In a case where the positive electrode sheet according to the embodiment of the present invention includes the positive electrode collector, the positive electrode collector constituting the positive electrode sheet according to the embodiment of the present invention is not particularly limited, and those used in a typical secondary battery can be appropriately applied. For the positive electrode collector which is usually used for these secondary batteries, for example, JP2016-201308A, JP2005-108835A, JP2012-185938A, WO2018/135395A, and the like can be appropriately referred to.

As the positive electrode collector, aluminum, an aluminum alloy, or the like is preferable.

In the positive electrode sheet according to the embodiment of the present invention, the positive electrode active material layer is less likely to collapse (peel off). In general, the collapse is remarkable at an end part of the positive electrode active material layer.

In the positive electrode active material layer of the positive electrode sheet according to the embodiment of the present invention, it is preferable that the binder is unevenly distributed in contact with the small particle group B. Specifically, an uneven distribution rate of the binder is preferably 58% or more, more preferably 60% or more, still more preferably 70% or more, even more preferably 80% or more, and particularly preferably 85% or more. The upper limit of the uneven distribution rate of the binder is practically 99%. Therefore, the uneven distribution rate of the binder is preferably 58% to 99% or less, more preferably 60% to 98% or less, still more preferably 70% to 97%, even more preferably 80% to 96%, and particularly preferably 85% to 95%.

The uneven distribution rate of the binder can be determined by measuring an element $\alpha$ derived from the binder, which is in contact with the small particle group B in an element mapping image of a cross section of the positive electrode active material layer, quantifying an amount of $\alpha$ in contact with the small particle group B with respect to an amount of the element $\alpha$ in the entire element mapping image, and calculating a ratio ([Amount of $\alpha$ in contact with small particle group B]/[Total amount of $\alpha$] $\times$ 100 (%)).

It is considered that the above-described uneven distribution of the binder occurs in a drying step in the formation of the positive electrode active material layer, in which the binder moves around the small particle group B. It is considered that, as a result of the uneven distribution of the binder, a bonding between the small particle groups B is reinforced, and thus the suppression of the collapse at the end part can be achieved at a higher level.

The above-described uneven distribution rate can be controlled by adjusting the surface tension, the ratio, and the like of the large particle group A and the small particle group B.

The positive electrode sheet according to the embodiment of the present invention can be obtained by forming the positive electrode active material layer using the composition for a positive electrode according to the embodiment of the present invention. For example, the positive electrode sheet according to the embodiment of the present invention can be manufactured by forming a film using the composition for a positive electrode according to the embodiment of the present invention. More specifically, the positive electrode sheet according to the embodiment of the present invention can be prepared by forming the above-described positive electrode active material layer on the above-described positive electrode collector or the like as a base material. The composition for a positive electrode according to the embodiment of the present invention is applied onto the positive electrode collector as a base material (which may be applied through another layer) to form a coating film, and the coating film is dried to obtain a positive electrode sheet having a positive electrode active material layer (coating and drying layer) on the base material. The coating film may be subjected to a press treatment as necessary.

A method of applying the composition for a positive electrode according to the embodiment of the present invention onto the positive electrode collector is not particularly limited, and a general method can be used.

[Non-aqueous electrolytic solution secondary battery]

The non-aqueous electrolytic solution secondary battery according to the embodiment of the present invention (hereinafter, also referred to as "secondary battery according to the embodiment of the present invention") includes the positive electrode sheet according to the embodiment of the present invention as a positive electrode. The secondary battery according to the embodiment of the present invention is the same as a typical non-aqueous electrolytic solution secondary battery, except that it has a configuration in which the positive electrode sheet according to the embodiment of the present invention is provided as a positive electrode.

That is, the secondary battery according to the embodiment of the present invention can be obtained by incorporating the positive electrode sheet according to the embodiment of the present invention as a positive electrode of a typical non-aqueous electrolyte secondary battery.

Hereinafter, a structure of the general non-aqueous electrolytic solution secondary battery will be described.

FIG. 1 is a schematic cross-sectional view showing a laminated structure of a general non-aqueous electrolytic solution secondary battery 10, including an operation portion which acts in a case where the battery is operated. The non-aqueous electrolytic solution secondary battery 10 has a laminated structure (hereinafter, also referred to as an electrode laminate) in which a negative electrode collector 1, a negative electrode active material layer 2, a separator 3, a positive electrode active material layer 4, and a positive electrode collector 5 are laminated in this order from the negative electrode side. The negative electrode active material layer 2, the positive electrode active material layer 4, and a space therebetween are filled with a non-aqueous electrolytic solution (not shown), and are separated by the separator 3. The separator 3 has pores, and functions as a positive and negative electrode-separating membrane which insulates the positive electrode and the negative electrode from each other while allowing transmission of the electrolytic solution and ions into the pores in a state in which a typical battery is used. With such a structure, for example, in a case of the lithium ion secondary battery, during charge, while electrons (e⁻) are supplied to the negative electrode side through an external circuit, lithium ions (Li⁺) move from the positive electrode through the electrolytic solution and are accumulated in the negative electrode. On the other hand, during discharge, while the lithium ions (Li⁺) accumulated in the negative electrode are returned to the positive electrode side through the electrolytic solution, electrons are supplied to an operation portion 6. In the example shown in the drawing, a light bulb is adopted as the operation portion 6, which is turned on by the discharge.

The secondary battery according to the embodiment of the present invention includes the positive electrode sheet according to the embodiment of the present invention, instead of the positive electrode active material layer 4 and the positive electrode collector 5 in the above-described general non-aqueous electrolytic solution secondary battery.

In the secondary battery according to the embodiment of the present invention, other members such as the negative electrode active material layer, the negative electrode collector, the electrolyte such as an electrolytic solution (an aqueous electrolytic solution or a non-aqueous electrolytic solution) or a solid electrolyte material, and the separator are not particularly limited except that the positive electrode sheet according to the embodiment of the present invention is provided as the positive electrode of the secondary battery. As these materials, members, and the like, those used for a typical secondary battery can be appropriately adopted. In addition, in the method for manufacturing the secondary battery according to the embodiment of the present invention, a typical method can be appropriately adopted, except that the positive electrode sheet according to the embodiment of the present invention is used as the positive electrode. For the members and the manufacturing methods which are usually used for these secondary batteries, for example, JP2016-201308A, JP2005-108835A, JP2012-185938A, WO2020/067106A, and the like can be appropriately referred to.

The secondary battery according to the embodiment of the present invention can be mounted on electronic apparatuses such as such as notebook computers, pen-input personal computers, mobile PCs, e-book players, mobile phones, cordless telephone handsets, pagers, handheld terminals, portable fax machines, portable copiers, portable printers, personal stereos, camcorders, LCD televisions, handheld vacuum cleaners, portable CD players, MiniDisc players, electric shavers, transceivers, electronic organizers, calculators, memory cards, portable tape recorders, radios, backup power supplies, and memory cards. In addition, in a case of being used for consumer applications, the secondary battery according to the embodiment of the present invention can be mounted on an automobile, an electric vehicle, a motor, a lighting instrument, a toy, a game device, a road conditioner, a watch, a strobe, a camera, a medical device (a pacemaker, a hearing aid, a shoulder massage device, and the like), or the like. Furthermore, the secondary battery according to the embodiment of the present invention can be used for various military usages and universe usages. In addition, the secondary battery according to the embodiment of the present invention can also be combined with a solar battery.

Hereinafter, the present invention will be described in more detail with reference to Examples. The present invention is not interpreted as being limited thereto.

Examples

[Preparation of positive electrode active material]

A positive electrode active material was prepared as follows.

<LFP1-1 to LFP1-3 (large particle group a)>

(LFP1-1)

A LiFePO₄ (LFP) powder raw material (manufactured by LOPAL TECH.CO., LTD., P198-S13 (trade name)) was used.

(LFP1-2 and LFP1-3)

20 g of LFP1-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials LFP1-2 and LFP1-3, respectively.

<LFP2-1 to LFP2-6 (small particle group b)>

(LFP2-1)

A LiFePO₄ (LFP) powder raw material (manufactured by LOPAL TECH.CO., LTD., P198-T5 (trade name)) was used.

(LFP2-2 to LFP2-6)

20 g of LFP2-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials LFP2-2 to LFP2-6, respectively.

<NMC1-1 to NMC1-3 (large particle group a)>

(NMCl-1)

A $LiNi_{1/3}Co_{1/3}Mn_{1/3}O_2$ (NMC) powder raw material (manufactured by TOSHIMA Manufacturing Co., Ltd., NCM111 (particle diameter: 12 $\mu$m) (trade name)) was used.

(NMC1-2 and NMC1-3)

20 g of NMC1-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials NMC1-2 and NMC1-3, respectively.

<NMC2-1 to NMC2-6 (small particle group b)>

(NMC2-1)

A $LiNi_{1/3}Co_{1/3}Mn_{1/3}O_2$ (NMC) powder raw material (manufactured by TOSHIMA Manufacturing Co., Ltd., NCM111 (particle diameter: 2 $\mu$m) (trade name)) was used.

(NMC2-2 to NMC2-6)

20 g of NMC2-1 was put into a powder treatment device Nobilta (trade name: NOB MINI, manufactured by Hosokawa Micron Group), and a surface was smoothed under a nitrogen atmosphere at the rotation speed and the treatment time shown in Table 1 to obtain powder-like positive electrode active materials NMC2-2 to NMC2-6, respectively.
In a case where number-based particle size distributions of LFP1-1 to LFP1-3 and NMC1-1 to NMC1-3 were obtained as described later, it was confirmed that each of the positive electrode active materials did not substantially contain particles having a particle diameter of less than 5.0 $\mu$m.
In a case where number-based particle size distributions of LFP2-1 to LFP2-6 and NMC2-1 to NMC2-6 were obtained as described later, it was confirmed that each of the positive electrode active materials did not substantially contain particles having a particle diameter of 5.0 $\mu$m or more.

(Measuring method of number-based particle size distribution)

0.01 g of each of the positive electrode active materials was dispersed in ethanol to prepare a dispersion having a transmittance of laser light (light having a wavelength of 650 nm) of 90% or more and 95% or less. A particle diameter (sphere-equivalent diameter) of all particles in the dispersion was measured using a particle diameter measuring device (LA-920 (trade name), manufactured by HORIBA, Ltd.) to obtain number-based particle size distribution data (cumulative particle size distribution data).

[Table 1]

|        | Rotation speed | Treatment time |        | Rotation speed | Treatment time |
|--------|----------------|----------------|--------|----------------|----------------|
| LPF1-1 | Not treated    |                | NMC1-1 | Not treated    |                |
| LPF1-2 | 8000 rpm       | 5 min          | NMC1-2 | 6000 rpm       | 5 min          |
| LPF1-3 | 8000 rpm       | 10 min         | NMC1-3 | 6000 rpm       | 10 min         |
| LPF2-1 | Not treat ed   |                | NMC2-1 | Not treated    |                |
| LPF2-2 | 8000 rpm       | 5 min          | NMC2-2 | 6000 rpm       | 5 min          |
| LPF2-3 | 8000 rpm       | 10 min         | NMC2-3 | 6000 rpm       | 10 min         |

(continued)

| | Rotation speed | Treatment time | | Rotation speed | Treatment time |
|---|---|---|---|---|---|
| LPF2-4 | 8000 rpm | 12 min | NMC2-4 | 6000 rpm | 12 min |
| LPF2-5 | 8500 rpm | 10 min | NMC2-5 | 6500 rpm | 10 min |
| LPF2-6 | 8500 rpm | 15 min | NMC2-6 | 6500 rpm | 15 min |

[Measurement of median diameter (D50)]

Median diameters (D50) of the large particle group a and the small particle group b obtained as described above were determined as described above. The median diameters (D50) of the large particle group a and the small particle group b are indicated in the column of "D50" in Table 2.

[Measurement of specific surface area]

Specific surface areas of the large particle group a and the small particle group b obtained as described above were determined as described above. The specific surface areas of the large particle group a and the small particle group b are indicated in the column of "Specific surface area" in Table 2.

[Measurement of surface tension]

Surface tensions of the large particle group a and the small particle group b obtained as described above with respect to NMP were determined as described above. The specific surface tensions of the large particle group a and the small particle group b are indicated in the column of "Surface tension" in Table 2.

[Preparation of composition for positive electrode and positive electrode sheet]

The positive electrode active material shown in Table 2, acetylene black (Li-100 (trade name), manufactured by Denka Company Limited) as a conductive auxiliary agent, polyvinylidene fluoride (PVDF) as a binder, and N-methylpyrrolidone (NMP) as a dispersion medium were mixed such that the positive electrode active material was 79.3% by mass, the conductive auxiliary agent was 0.4% by mass, the binder was 0.3% by mass, and the dispersion medium was 20.0% by mass, thereby obtaining a positive electrode slurry (composition for a positive electrode) (Nos. 1 to 24). The positive electrode active material used for producing the positive electrode slurries in Experiment Nos. 2 to 4, 6 to 12, 14 to 16, and 18 to 24 was a mixture of the large particle group a and the small particle group b, and was a mixture in which the large particle group A and the small particle group B had the number frequency shown in Table 2.

Each of the positive electrode slurries was applied onto one surface of a positive electrode collector (aluminum foil; length: 200 mm, width: 150 mm) having a thickness of 12 $\mu$m, and dried at 120°C until the dispersion medium was volatilized. Thereafter, a pressing processing was carried out using a roll press machine to obtain a sheet-shaped positive electrode sheet (Nos. 1 to 24) including a positive electrode collector and a positive electrode active material. A thickness of each positive electrode active material layer was 250 $\mu$m.

[Method of evaluating maximum filling rate]

0.01 g of the positive electrode active material powder consisting of the large particle group A and the small particle group B was dispersed in ethanol at the ratio shown in Table 2, and a dispersion was prepared such that a transmittance of laser light (light ray having a wavelength of 650 nm) was 90% or more and 95% or less. A particle diameter (sphere-equivalent diameter) of all particles in the dispersion was measured using a particle diameter measuring device (LA-920 (trade name), manufactured by HORIBA, Ltd.) to obtain volume-based cumulative particle size distribution data of particle diameters. The above-described cumulative particle size distribution data was input to multi-component particle filling layer space rate estimation model calculation software (CALVOID N.EXE, developed by Dr. Michitaka Suzuki, Professor Emeritus, Department of Chemical Engineering, Graduate School of Engineering, University of Hyogo; reference URL: https://www.eng.u-hyogo.ac.jp/group/group42/hakaru/calvoid.html), and a space rate estimation value was obtained and the maximum filling rate was calculated (Maximum filling rate (%) = 100 - Space rate estimation value).

In a case of obtaining the above-described space rate estimation value, a constant value ($\varepsilon_j$ = 0.36 for each component particle) was used as a space rate $\varepsilon_j$ in a case where each component particle was filled alone, and the volume-based cumulative particle size distribution measured above was used as a undersieve cumulative weight percentage $R_j$.

[Method of evaluating state of binder uneven distribution]

A cross section of the positive electrode active material layer was observed by SEM-EDX (Energy Dispersive X-ray Spectroscopy) to confirm the uneven distribution rate of the binder. Specifically, the following procedure was performed.

In a dry room, a central portion of one positive electrode sheet obtained as described above was punched out with a hand punch (manufactured by NOGAMI R&D Co., Ltd.) having an inner diameter of 10 mm to obtain a circular piece. The obtained circular piece was cut at a center portion of a main surface (circular surface) in a direction (thickness direction) perpendicular to the main surface of the circular piece to obtain a test piece for cross section observation. The test piece was transferred to an ion milling device IM4000 (manufactured by Hitachi High-Tech Corporation) through an atmosphere non-exposed transfer vessel, and the cutting was carried out by the ion milling device. An acceleration voltage during the cutting was set to 6.0 kV, and a discharge voltage was set to 1.5 kV.

The cross section (cross section in the thickness direction) of the positive electrode active material layer of the obtained test piece was observed by SEM using a field emission-scanning electron microscope (FE-SEM (trade name), manufactured by JEOL Ltd., JSM-7100F) (acceleration voltage: 1.5 kV). An observation area was 20 $\mu$m $\times$ 16 $\mu$m. By the observation, positions of each of the large particle group A and the small particle group B were read.

For the EDX observation, an energy dispersive X-ray analysis device (EDX) (NORAN System 7 type (trade name), manufactured by Thermo Fisher Scientific, Inc.) was used, and an element mapping image of the cross section of the positive electrode active material layer was obtained at an acceleration voltage of 5 kV. An observation area was 20 $\mu$m $\times$ 16 $\mu$m. An amount of F (fluorine; derived from PVDF) in contact with the small particle group B was quantified from the obtained element mapping image. The amount of F in contact with the small particle group B was calculated as the uneven distribution rate of the binder to the small particle group B with respect to the total amount of F in the entire mapping image (Uneven distribution rate of binder = [Amount of F in contact with small particle group B/Total amount of F] $\times$ 100 (%)).

Here, the "F in contact with the small particle group B" means F in contact with only the small particle group B in the above-described mapping image, and does not include F in contact with both the large particle group A and the small particle group B.

The uneven distribution rate of the binder to the small particle group B is indicated in the column of "Uneven distribution rate of binder" in Table 3.

[Method of evaluating shape stability during punching]

A central portion of each of the positive electrode sheets obtained as described above was punched out with a punching machine (manufactured by NOGAMI R&D Co., Ltd., clearance: 1 $\mu$m) having a size of 2.5 cm square, and the collapsed (peeled) material which fell off during the punching was collected in an entire amount and the weight thereof was measured. The experiment was performed 10 times, and an average value of the 10 obtained measurement values was defined as the collapsed material weight. The obtained collapsed material weight was evaluated according to the following evaluation standard.

-Evaluation standard-

A: 5 mg or less
B: more than 5 mg and 10 mg or less
C: more than 10 mg and 15 mg or less
D: more than 15 mg and 20 mg or less
E: more than 20 mg and 25 mg or less
F: more than 25 mg

[Production of non-aqueous electrolytic solution secondary battery]

1) Preparation of non-aqueous electrolytic solution 1

A mixed solvent in which ethylene carbonate (EC), dimethyl carbonate (DMC), and ethyl methyl carbonate (EMC) were mixed at a mass ratio of EC:DMC:EMC = 3:4:3 was blended with LiPF$_6$ as a lithium salt to a concentration of 1 M to prepare a non-aqueous electrolytic solution (non-aqueous electrolytic solution 1).

2) Preparation of negative electrode sheet

A negative electrode active material (artificial graphite), a styrene-butadiene copolymer (SBR) as a binder, carboxymethyl cellulose (CMC) as a thickener, and water as a solvent were mixed at a mass ratio of negative electrode active material:SBR:CMC:water = 60:1.5:0.5:38 to obtain a negative electrode slurry.

The negative electrode slurry was applied onto one surface of a negative electrode collector (copper foil) having a thickness of 12 μm, and dried at 150°C until the solvent was volatilized. Thereafter, a pressing step was performed using a roll press machine to obtain a sheet-shaped negative electrode (negative electrode sheet) including a negative electrode collector and a negative electrode active material layer. A thickness of the negative electrode active material layer was approximately 180 μm.

3) Production of non-aqueous electrolytic solution secondary battery

The positive electrode sheet obtained in [Preparation of composition for positive electrode and positive electrode sheet] described above and a negative electrode sheet were laminated through a separator to obtain an electrode laminate consisting of positive electrode collector-positive electrode active material layer-separator-negative electrode active material layer-negative electrode collector. By ultrasonic welding, an aluminum tab was attached to an end part of the positive electrode collector, and a nickel tab was attached to an end part of the negative electrode collector. A battery assembly was produced by accommodating the electrode laminate in a laminating container. After injecting the non-aqueous electrolytic solution 1 in a state in which a liquid injection port was open, the liquid injection port was sealed to seal the container, thereby producing a non-aqueous electrolytic solution secondary battery for an evaluation test.

[Measuring method of volumetric energy density]

The positive electrode sheet used for preparing each of the non-aqueous electrolytic solution secondary batteries described above was punched out to have a diameter of 10 mm, the positive electrode collector was removed from the obtained punched-out piece, and a thickness of the positive electrode active material layer was measured. A thickness of the negative electrode active material layer was measured in the same manner. A thickness of power generation elements was obtained from the thickness of the positive electrode collector + the thickness of the positive electrode active material layer + the thickness of the separator + the thickness of the negative electrode active material layer + the thickness of the negative electrode collector. The thickness of each constitutional layer was measured using a constant pressure thickness measuring device (trade name: PG-20J, manufactured by TECLOCK Co., Ltd.). A volume (L) of the power generation elements was obtained by multiplying the above-described thickness of the power generation element by an area of a circular surface of the power generation element. Here, in the calculation of the volume (L) of the power generation elements, volume reduction due to the collapse of the end part due to the punching of the positive electrode sheet was not considered, and the ideal volume of the power generation elements was obtained.

Separately, a discharge capacity (Ah) for standard was measured by charging and discharging under the non-aqueous electrolytic solution secondary battery obtained as described above under the condition 1 described later, an average voltage (V) during discharge was measured, and an electric energy (Wh) was determined by the product of the discharge capacity (Ah) for standard × the average voltage (V).

A volumetric energy density of the power generation elements was calculated by dividing the electric energy (Wh) obtained as described above by the volume (L) of the non-aqueous electrolytic solution secondary battery obtained as described above. The obtained value was evaluated by applying the obtained value to the following evaluation standard.

-Evaluation standard-

A: 400 Wh/L or more
B: 390 Wh/L or more and less than 400 Wh/L
C: 380 Wh/L or more and less than 390 Wh/L
D: 370 Wh/L or more and less than 380 Wh/L
E: 360 Wh/L or more and less than 370 Wh/L
F: less than 360 Wh/L

<Condition 1. Charge and discharge conditions>

(Charging and discharging conditions of Experiment Nos. 1 to 12 (experiments using LFP as a positive electrode active material))
Constant current (CC)-constant voltage (CV) charging: current value of 15 mA, upper limit voltage value of 3.6 V, termination current value of 0.5 mA
CC discharging: current value of 15 mA, termination voltage value of 2.0 V
(Charging and discharging conditions of Experiment Nos. 13 to 24 (experiments using NMC as positive electrode active material))
CC-CV charging: current value of 15 mA, upper limit voltage value of 4.2 V, termination current value of 0.5 mA
CC discharging: current value of 15 mA, upper limit voltage value of 3.0 V

The obtained results are shown in Tables 2 and 3.

[Table 2-1]

| NO. | Remark | Large particle group A | | | | | Small particle group B | | | | | Maximum filling rate | Added amount of binder |
|---|---|---|---|---|---|---|---|---|---|---|---|---|---|
| | | Type of active material | D50 (μm) | Specific surface area (m²/g) | Surface tension $\gamma A$ (mN/m) | Ratio (number frequency) (%) | Type of active material | D50 (μm) | Specific surface area (m²/g) | Surface tension $\gamma B$ (mN/m) | Ratio (number frequency) (%) | (%) | (wt%) |
| 1 | Comparative Example | LFP1-1 | 8.6 | 8.1 | 12.1 | 100 | - | - | - | - | - | 65 | 0.3 |
| 2 | Example | LFP1-1 | 8.6 | 8.1 | 12.1 | 90 | LFP2-3 | 1.0 | 12.0 | 29.2 | 10 | 79 | 0.3 |
| 3 | Example | LFP1-1 | 8.6 | 8.1 | 12.1 | 70 | LFP2-3 | 1.0 | 12.0 | 29.2 | 30 | 83 | 0.3 |
| 4 | Comparative Example | LFP1-1 | 8.6 | 8.1 | 12.1 | 50 | LFP2-3 | 1.0 | 12.0 | 29.2 | 50 | 75 | 0.3 |
| 5 | Comparative Example | - | - | - | - | - | LFP2-3 | 1.0 | 12.0 | 29.2 | 100 | 66 | 0.3 |
| 6 | Example | LFP1-2 | 8.6 | 7.6 | 18.4 | 70 | LFP2-3 | 1.0 | 12.0 | 29.2 | 30 | 83 | 0.3 |
| 7 | Example | LFP1-3 | 8.6 | 6.6 | 21.0 | 70 | LFP2-3 | 1.0 | 12.0 | 29.2 | 30 | 83 | 0.3 |
| 8 | Example | LFP1-3 | 8.6 | 6.6 | 21.0 | 70 | LFP2-2 | 1.0 | 12.8 | 21.1 | 30 | 83 | 0.3 |
| 9 | Example | LFP1-3 | 8.6 | 6.6 | 21.0 | 70 | LFP2-4 | 1.0 | 11.0 | 33.2 | 30 | 83 | 0.3 |
| 10 | Example | LFP1-3 | 8.6 | 6.6 | 21.0 | 70 | LFP2-5 | 1.0 | 10.3 | 36.5 | 30 | 83 | 0.3 |
| 11 | Comparative Example | LFP1-1 | 8.6 | 8.1 | 12.1 | 70 | LFP2-1 | 1.0 | 13.4 | 13.1 | 30 | 83 | 0.3 |
| 12 | Comparative Example | LFP1-1 | 8.6 | 8.1 | 12.1 | 70 | LFP2-6 | 1.0 | 9.4 | 40.3 | 30 | 83 | 0.3 |

[Table 2-2]

| NO. | Remark | Large particle group A | | | | | Small particle group B | | | | | Maximum filling rate | Added amount of binder |
| | | Type of active material | D50 | Specific surface area | Surface tension $\gamma$A | Ratio (number frequency) | Type of active material | D50 | Specific surface area | Surface tension $\gamma$B | Ratio (number frequency) | | |
| | | | $\mu$m | m$^2$/g | mN/m | % | | $\mu$m | m$^2$/g | mN/m | % | % | wt% |
| 13 | Comparative Example | NMC1-1 | 12.0 | 7.2 | 11.5 | 100 | - | - | - | - | - | 63 | 0.3 |
| 14 | Example | NMC1-1 | 12.0 | 7.2 | 11.5 | 90 | NMC2-3 | 2.0 | 9.2 | 31.5 | 10 | 75 | 0.3 |
| 15 | Example | NMC1-1 | 12.0 | 7.2 | 11.5 | 70 | NMC2-3 | 2.0 | 9.2 | 31.5 | 30 | 81 | 0.3 |
| 16 | Comparative Example | NMC1-1 | 12.0 | 7.2 | 11.5 | 50 | NMC2-3 | 2.0 | 9.2 | 31.5 | *50* | 70 | 0.3 |
| 17 | Comparative Example | - | - | - | - | - | NMC2-3 | 2.0 | 9.2 | 31.5 | 100 | 65 | 0.3 |
| 18 | Example | NMC1-2 | 12.0 | 6.8 | 18.4 | 70 | NMC2-3 | 2.0 | 9.2 | 31.5 | 30 | 81 | 0.3 |
| 19 | Example | NMC1-3 | 12.0 | 5.4 | 22.2 | 70 | NMC2-3 | 2.0 | 9.2 | 31.5 | 30 | 81 | 0.3 |
| 20 | Example | NMC1-3 | 12.0 | 5.4 | 22.2 | 70 | NMC2-2 | 2.0 | 10.2 | 21.5 | 30 | 81 | 0.3 |
| 21 | Example | NMC1-3 | 12.0 | 5.4 | 22.2 | 70 | NMC2-4 | 2.0 | 8.2 | 36.0 | 30 | 81 | 0.3 |
| 22 | Example | NMC1-3 | 12.0 | 5.4 | 22.2 | 70 | NMC2-5 | 2.0 | 10.3 | 37.0 | 30 | 81 | 0.3 |
| 23 | Comparative Example | NMC1-1 | 12.0 | 7.2 | 11.5 | 70 | NMC2-1 | 2.0 | 11.0 | 14.0 | 30 | 81 | 0.3 |
| 24 | Comparative Example | NMC1-1 | 12.0 | 7.2 | 11.5 | 70 | NMC2-6 | 2.0 | 7.3 | 40.2 | 30 | 81 | 0.3 |

[Table 3]

| NO. | Remark | Positive electrode active material layer | Uneven distribution rate of binder | Shape stability | Battery performance |
|---|---|---|---|---|---|
| | | Film thickness | | | |
| | | μm | | | Energy density |
| 1 | Comparative Example | 250 | 51% | F | F |
| 2 | Example | 250 | 60% | D | D |
| 3 | Example | 250 | 73% | C | C |
| 4 | Comparative Example | 250 | 53% | F | F |
| 5 | Comparative Example | 250 | 55% | F | F |
| 6 | Example | 250 | 80% | B | B |
| 7 | Example | 250 | 86% | A | A |
| 8 | Example | 250 | 79% | B | B |
| 9 | Example | 250 | 86% | A | A |
| 10 | Example | 250 | 80% | B | B |
| 11 | Comparative Example | 250 | 50% | F | F |
| 12 | Comparative Example | 250 | 55% | F | F |

| NO. | Remark | Positive electrode active material layer | Uneven distribution rate of binder | Shape stability | Battery performance |
|---|---|---|---|---|---|
| | | Film thickness | | | |
| | | μm | | | Energy density |
| 13 | Comparative Example | 250 | 48% | F | F |
| 14 | Example | 250 | 63% | D | D |
| 15 | Example | 250 | 74% | C | C |
| 16 | Comparative Example | 250 | 50% | F | F |
| 17 | Comparative Example | 250 | 51% | F | F |
| 18 | Example | 250 | 79% | A | A |
| 19 | Example | 250 | 83% | A | A |
| 20 | Example | 250 | 77% | B | B |
| 21 | Example | 250 | 75% | B | B |
| 22 | Example | 250 | 77% | B | B |
| 23 | Comparative Example | 250 | 50% | F | F |
| 24 | Comparative Example | 250 | 50% | F | F |
| (Note to Table 2) | | | | | |

For convenience, items (median diameters) related to the "large particle group a" are also described in the column of "Large particle group A". Similarly, items related to the "small particle group b" are also described in the column of "Small particle group B".

"-" indicates that the component was not used.

As shown in Tables 2 and 3, in a case where the composition for a positive electrode did not contain the large particle group A and the small particle group B at the frequency defined in the present invention (Experiment Nos. 1, 4, 5, 13, 16, and 17) and in a case where the surface tension $\gamma B$ of the small particle group B with respect to NMP did not satisfy the expression B1: $15.0 \leq \gamma B \leq 40.0$ (Experiment Nos. 11, 12, 23, and 24), the end part of the positive electrode active material was likely to collapse in the positive electrode sheet, and thus the shape stability was deteriorated. In addition, the non-aqueous electrolytic solution secondary battery including the positive electrode sheet as the positive electrode had a deteriorated battery capacity (energy density).

On the other hand, in a case where the composition for a positive electrode contained the large particle group A and the small particle group B at the frequency defined in the present invention and the surface tension $\gamma B$ of the small particle group B with respect to NMP satisfied the expression B1: $15.0 \leq \gamma B \leq 40.0$ (Experiment Nos. 2, 3, 6 to 10, 14, 15, and 18 to 22), even in a case where a positive electrode active material layer having a thickness of 250 $\mu$m was formed from the composition for a positive electrode, having a small amount of the binder of 0.3% by mass, the collapse of the end part of the positive electrode active material was suppressed in the obtained positive electrode sheet, and thus the shape stability was excellent. In addition, the non-aqueous electrolytic solution secondary battery including the positive electrode sheet as the positive electrode had an improved battery capacity.

The present invention has been described with the embodiments thereof, any details of the description of the present invention are not limited unless described otherwise, and it is obvious that the present invention is widely construed without departing from the gist and scope of the present invention described in the accompanying claims.

The present application claims the priority of JP2023-90456 filed in Japan on May 31, 2023, the contents of which are incorporated herein by reference, as a part of the description of the present specification.

Explanation of References

    10: non-aqueous electrolytic solution secondary battery
    1: negative electrode collector
    2: negative electrode active material layer
    3: separator
    4: positive electrode active material layer
    5: positive electrode collector
    6: operation portion (light bulb)

**Claims**

1. A composition for a positive electrode of a non-aqueous electrolytic solution secondary battery, the composition comprising:

    a positive electrode active material consisting of a large particle group A having a particle diameter of 5.0 $\mu$m or more and a small particle group B having a particle diameter of less than 5.0 $\mu$m,
    wherein, in a number-based particle size distribution of the positive electrode active material, in a case where a total frequency is set to 100%, a frequency of the large particle group A is 60% or more and a frequency of the small particle group B is 40% or less, and
    a surface tension $\gamma B$ (mN/m) of the small particle group B with respect to N-methylpyrrolidone satisfies the following expression B1,
    the expression B1:

$$15.0 \leq \gamma B \leq 40.0.$$

2. The composition for a positive electrode according to claim 1,

    wherein a surface tension $\gamma A$ (mN/m) of the large particle group A with respect to N-methylpyrrolidone satisfies the following expression A1,
    the expression A1:

$$15.0 \leq \gamma A \leq 25.0.$$

3. The composition for a positive electrode according to claim 2,

    wherein the surface tension $\gamma A$ of the large particle group A satisfies the following expression A2,

the expression A2:

$$18.0 \leq \gamma A \leq 22.0.$$

4. The composition for a positive electrode according to claim 3,

wherein the surface tension $\gamma B$ of the small particle group B satisfies the following expression B2, the expression B2:

$$25.0 \leq \gamma B \leq 35.0.$$

5. The composition for a positive electrode according to claim 4, wherein a maximum filling rate calculated from a volume-based cumulative particle size distribution of the positive electrode active material is 80% or more.

6. A positive electrode sheet comprising: a positive electrode active material layer formed of the composition for a positive electrode according to any one of claims 1 to 5.

7. A non-aqueous electrolytic solution secondary battery comprising: the positive electrode sheet according to claim 6 as a positive electrode.

# FIG. 1

## INTERNATIONAL SEARCH REPORT

| International application No. |
|---|
| **PCT/JP2024/018890** |

### A. CLASSIFICATION OF SUBJECT MATTER

*H01M 4/139*(2010.01)i; *H01M 4/13*(2010.01)i; *H01M 4/36*(2006.01)i
FI:　H01M4/139; H01M4/13; H01M4/36 D

According to International Patent Classification (IPC) or to both national classification and IPC

### B. FIELDS SEARCHED

Minimum documentation searched (classification system followed by classification symbols)

H01M4/139; H01M4/13; H01M4/36

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2022-120400 A (PRIME PLANET ENERGY & SOLUTIONS INC.) 18 August 2022 (2022-08-18)<br>entire text | 1-7 |
| A | JP 2023-034700 A (PRIME PLANET ENERGY & SOLUTIONS INC.) 13 March 2023 (2023-03-13)<br>entire text | 1-7 |
| A | JP 2019-029212 A (TOYOTA MOTOR CORP.) 21 February 2019 (2019-02-21)<br>entire text | 1-7 |
| A | JP 2023-034701 A (PRIME PLANET ENERGY & SOLUTIONS INC.) 13 March 2023 (2023-03-13)<br>entire text | 1-7 |

☐ Further documents are listed in the continuation of Box C.　☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 July 2024** | **06 August 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/018890**

| Patent document cited in search report | | | Publication date (day/month/year) | Patent family member(s) | | | Publication date (day/month/year) |
|---|---|---|---|---|---|---|---|
| JP | 2022-120400 | A | 18 August 2022 | US | 2022/0255065 | A1 | |
| | | | | entire text | | | |
| | | | | CN | 114883518 | A | |
| | | | | entire text | | | |
| JP | 2023-034700 | A | 13 March 2023 | US | 2023/0081761 | A1 | |
| | | | | entire text | | | |
| | | | | EP | 4141993 | A1 | |
| | | | | entire text | | | |
| | | | | CN | 115732651 | A | |
| | | | | entire text | | | |
| | | | | KR | 10-2023-0032919 | A | |
| | | | | entire text | | | |
| JP | 2019-029212 | A | 21 February 2019 | US | 2019/0036110 | A1 | |
| | | | | entire text | | | |
| | | | | CN | 109326793 | A | |
| | | | | entire text | | | |
| | | | | KR | 10-2019-0013656 | A | |
| | | | | entire text | | | |
| JP | 2023-034701 | A | 13 March 2023 | US | 2023/0080226 | A1 | |
| | | | | entire text | | | |
| | | | | EP | 4141986 | A1 | |
| | | | | entire text | | | |
| | | | | CN | 115732673 | A | |
| | | | | entire text | | | |
| | | | | KR | 10-2023-0032918 | A | |
| | | | | entire text | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015230748 A
- WO 2018155314 A
- JP 2016201308 A
- JP 2005108835 A
- JP 2012185938 A
- WO 2018135395 A
- WO 2020067106 A
- JP 2023090456 A